Europäisches Patentamt

European Patent Office

Office européen des brevets

(11) Publication number: **0 104 042**
**B1**

# EUROPEAN PATENT SPECIFICATION

(45) Date of publication of patent specification: **05.10.88**

(51) Int. Cl.⁴: **C 08 F 26/10**

(21) Application number: **83305356.4**

(22) Date of filing: **13.09.83**

(54) **Preparation of polyvinylpyrrolidone or vinyl-pyrrolidone/vinyl acetate copolymers of various molecular weights using a single initiator system.**

(30) Priority: **20.09.82 US 419869**
**20.09.82 US 419870**

(43) Date of publication of application:
**28.03.84 Bulletin 84/13**

(45) Publication of the grant of the patent:
**05.10.88 Bulletin 88/40**

(84) Designated Contracting States:
**CH DE FR GB LI**

(56) References cited:
**FR-A-1 455 547**
**US-A-4 058 655**

(73) Proprietor: **GAF CORPORATION**
**1361 Alps Road**
**Wayne, New Jersey 07470 (US)**

(72) Inventor: **Barabas, Eugene S.**
**41 Stanie Brae Drive**
**Watchung New Jersey 07060 (US)**
Inventor: **Cho, James R.**
**50 Powder Mill Lane**
**Oakland New Jersey 07436 (US)**

(74) Representative: **Ford, Michael Frederick et al**
**MEWBURN ELLIS & CO. 2/3 Cursitor Street**
**London EC4A 1BQ (GB)**

Courier Press, Leamington Spa, England.

## Description

### Background of the invention

Polymerization of N-vinyl-2-pyrrolidone (vinylpyrrolidone) and vinyl acetate by free radical mechanisms to form vinylpyrrolidone/vinyl acetate copolymer (PVP/VA) is well known and is described for instance in U.S. patent 2,667,473. Polymerization of N-vinyl-2-pyrrolidone (vinylpyrrolidone) by free radical mechanisms to form polyvinylpyrrolidone (PVP) is also well known and is described for instance in U.S. patents 4,058,655, 4,053,696 and 3,862,915. Such polymerizations are usually carried out in water or organic solvent using free radical initiators such as hydrogen peroxide, alkyl hydroperoxides, dialkyl peroxides such as di-tert.-butyl peroxide or azodiisobutyronitrile. Previously suggested initiators have, however, not been completely satisfactory. It has for instance been necessary to use different initiator systems depending upon whether low, medium, or high molecular weight PVP or PVP/VA product is desired. While some variation of molecular weight has been possible with previously used initiators, no single initiator has previously been known which could be used for making PVP or PVP/VA of a wide range of molecular weights. It has also been difficult with many initiator and solvent systems to obtain polymer of narrow molecular weight range. The toxicity of decomposition products of commonly used initiators has also frequently resulted in product unsuitable for pharmaceutical use. Other disadvantages have included a need for amine or ammonia buffers with hydrogen peroxide to control pH, the production of undesirable impurities as decomposition products of eg. azodiisobutyronitrile initiator, etc. Previously used peroxides such as di-tert-butyl peroxide require the use of extremely high temperatures.

The various disadvantages inherent in use of previously known initiators are largely eliminated or alleviated by the process of the present invention.

### Summary of the invention

In accordance with the present invention vinylpyrrolidone or vinylpyrrolidone and vinyl acetate monomers are polymerized in a reaction zone in the presence of free radical initiator consisting essentially of t-Butylperoxypivalate to form polyvinylpyrrolidone or vinylpyrrolidone/vinyl acetate copolymer. In preferred embodiments of the invention the polymerization is carried out at a temperature between about 40°C and about 150°C and in solvent consisting essentially of water, isopropyl alcohol, sec. butyl alcohol or mixtures thereof. Notable possibilities for the solvent are isopropylalcohol alone and a mixture of isopropylalcohol and water containing 40° wt % to 100 wt % water.

### Detailed description

As noted above, previously suggested free radical initiators for initiating polymerization of vinylpyrrolidone or vinylpyrrolidone and vinyl acetate to form polyvinylpyrrolidone (PVP) or vinylpyrrolidone/vinyl acetate copolymer (PVP/VA) have not for one reason or other proven entirely satisfactory. It has now been found that many of the disadvantages inherent in use of the previously suggested initiators can be avoided or alleviated by use of t-Butylperoxypivalate as the free radical initiator for these polymerizations. t-Butylperoxypivalate is a known free radical initiator which has previously been suggested for other uses such as initiation of vinyl chloride polymerization reactions, but which has not been previously suggested for use in polymerizing vinylpyrrolidone or vinylpyrrolidone and vinyl acetate to form polyvinylpyrrolidone or vinylpyrrolidone/vinyl acetate copolymer. By use of this initiator it has now been found possible to produce PVP or PVP/VA of almost any desired molecular weight range of the PVP or PVP/VA product within narrow limits. Since the use of t-Butylperoxypivalate initiator does not produce toxic decomposition products, this initiator can be used to produce pharmaceutical grades of PVP or PVP/VA.

In accordance with conventional practice PVP and PVP/VA product referred to herein will be characterized primarily in terms of K value. K value is a function of molecular weight and as used herein is calculated by the method set forth in the Encyclopedia of Chemical Technology, Vol. 21, 2nd Ed., p. 427—428 (John Wiley and Sons, 1970).

The present invention is useful in manufacturing PVP and PVP/VA having K values ranging from 10 to 100 corresponding to number average molecular weights of about 6000 and about 450,000 respectively. K value of PVP and PVP/VA produced according to the present invention is dependent primarily upon the amount of isopropyl alcohol or secondary butyl alcohol (sec. butyl alcohol) used relative to the amount of vinylpyrrolidone monomer. Higher K values result from the use of smaller amounts of alcohol. K value is also to some extent influenced by the operating conditions used, especially pressure, temperature and concentration of free radical initiator, i.e. t-Butylperoxypivalate. In general higher temperatures and initiator concentration result in somewhat lower K values for the PVP or PVP/VA product. It is usually preferred to adjust the types and proportions of ingredients so as to produce PVP or PVP/VA of the generally desired K value range with operating conditions, especially temperature, being used for the final adjustment to obtain the precise K value desired. This technique allows production of PVP or PVP/VA of almost any desired K value with very small variation in molecular weight of the product.

While the invention may be practiced using a wide variety of temperature and pressure conditions, one of the advantages of the invention is that it need not be practiced at the elevated temperatures and pressures commonly used with previously known initiator and solvent systems.

This is especially true where PVP or PVP/VA product of relatively low K value is being produced. For product of especially low K value such as between about K 10 and about K 20 temperatures between 100° and 150°C and pressure between $2.3 \times 10^5$ Pa (20 psig) and $11.3.10^5$ Pa (150) psig) are preferred. For product of higher K values, e.g. between about K 20 and about K 90 or K 100 temperatures between 40° and 100°C and pressures between atmospheric (0 psig) and $2.3.10^5$ Pa (20 psig) are preferred. Elevated temperatures and pressures may of course be used for high K value product as well as for low K value product, but are not generally considered desirable because of the need for pressurized equipment and the additional energy requirements needed for maintaining such conditions.

In practicing the invention t-Butylperoxypivalate initiator is generally used in amounts between 0.1% and 5 weight percent (wt%) based on the total of the vinylpyrrolidone or vinylpyrrolidone and vinyl acetate monomers. Isopropyl alcohol or sec. butyl alcohol functions both as solvent and as a chain transfer agent so that relatively larger amounts of alcohol as a percentage of the amount of monomer used serve to produce PVP or PVP/VA product of decreasing K value. Isopropyl alcohol is generally used except when product of exceptionally high K values are desired. When used isopropyl alcohol is frequently present in amounts between about 5 wt% and about 100 wt% based on monomer. For product of exceptionally low K value, it may be desirable to use increased amounts of initiator or relatively high temperatures or pressures in order to reduce the amount of alcohol chain transfer agent needed.

The relative amounts of vinylpyrrolidone and vinyl acetate used in making PVP/VA product according to the invention may vary considerably depending upon the exact nature of the desired copolymer product. In general vinylpyrrolidone may be used in amounts between about 5 wt% and about 95 wt% based on total vinylpyrrolidone and vinyl acetate monomers with the use of between about 25 wt% and about 75 wt% on the same basis being preferred. Use of relatively smaller amounts of vinylpyrrolidone relative to the amount of vinyl acetate used results in product which has film forming properties similar to polyvinylacetate. Use of relatively larger amounts of vinylpyrrolidone and relatively smaller amounts of vinyl acetate results in product which has film forming properties similar to polyvinylpyrrolidone.

The amount of water used in the process of the invention may vary widely depending upon the K value desired for the PVP or PVP/VA product and the amount of isopropyl or sec. butyl alcohol chain transfer agent used. For manufacturing product of low K value, i.e. about 30 or below, it is frequently desirable to omit the water completely and use only sec. butyl alcohol or more preferably isopropyl alcohol. For high K value product the amount of water may be increased with water being used as the only solvent for manufacturing product of high K value, e.g. about 90 or above. For ease of processing, the total amount of solvent, i.e. water plus isopropyl or sec. butyl alcohol is preferably between about 40 wt% and about 100 wt% based on the amount of monomer used.

The invention may be practiced as either a batch or continuous process, however, continuous or semicontinuous additon of vinylpyrrolidone or vinylpyrrolidone and vinyl acetate monomers and t-Butylperoxypivalate initiator is preferred especially in making product of low K value.

While product of the process of the invention may include any water and/or isopropyl or sec. butyl alcohol used in making the PVP or PVP/VA product, it is generally preferred to remove at least the alcohol and frequently both the water and the alcohol after the polymerization reaction is completed. Alcohol may be readily removed by distillation and where water and alcohol are both present, an azeotropic mixture is readily removed by distillation. For ease in removing product from the reaction zone it is generally preferred that the product be removed as a water solution. For this purpose an aqueous solution of between about 20 wt% and about 60 wt% solids is preferred. Where water is not used in the process in sufficient quantities for this purpose, it is generally preferred to introduce water to the reaction zone as alcohol is distilled off in order to allow withdrawal of the PVP/VA product as an aqueous solution. Following withdrawal from the reaction zone the aqueous solution of PVP or PVP/VA may be transported or stored or water may be removed as by spray drying to produce a solid PVP or PVP/VA product.

The following examples are intended to illustrate the invention without limiting the scope thereof as claimed.

Example 1

A 12 liter four-necked flask equipped with mechanical stirrer, reflux condenser, thermometer, and glass stopper was purged with nitrogen for 15 minutes. 1150 grams of vinylpyrrolidone and 3850 grams of distilled water were then charged and a positive nitrogen pressure was maintained throughout the reaction. The reactants were heated to 55°C in 20 minutes and 3 milliliters (ml) of t-Butylperoxypivalate was then added to the vinylpyrrolidone/water mixture through one of the necks of the flask. The temperature of the reactor was then maintained at 55°C for 3 hours after which the system was heated to 80°C in one-half hour and maintained at 80°C for another 15 minutes. The reactor was then cooled to room temperature and the product discharged. The product had the following properties:

| | |
|---|---|
| density | 0.8493 gm/ml |
| K value | 91.1 |
| APHA color* | 5/10 |
| vinylpyrrolidone | 0.054 wt% |

* APHA color denotes the color scale published by the American Public Health Association.

Example 2

A 2 liter kettle equipped with mechanical stirrer, reflux condenser, thermometer and glass stopper was purged with nitrogen for 10 minutes after which the following ingredients were charged under a blanket of nitrogen:

| | |
|---|---|
| 712 g | distilled water |
| 68 g | isopropanol |
| 42 g | vinylpyrrolidone |
| 2.1 g | t-Butylperoxypivalate |

The reactants were heated to 70°C after which additional 378 grams of vinylpyrrolidone was added continuously over a two-hour period during which the temperature was maintained at 70°C. The temperature was then held at 70°C for an additional hour after which an additional 1 gram of t-Butylperoxypivalate was added. The temperature was then maintained at 70°C for an additional hour following which the kettle was cooled and the product was discharged. Analysis indicated the product had a solids content of 36.26 wt% and a K value of 63.1.

Example 3

A 2 liter kettle equipped as described in Example 2 was purged with nitrogen for 10 minutes and then maintained under a nitrogen blanket. After the initial nitrogen purge the following ingredients were added:

| | |
|---|---|
| 390 g | distilled water |
| 390 g | isopropyl alcohol |
| 42 g | vinylpyrrolidone |
| 2.1 g | t-Butylperoxypivalate |

The mixture was then heated to a gentle reflux (82°C) and maintained at reflux while an additional 378 grams of vinylpyrrolidone was added continuously over a 2 hour period. The temperature was then held for an additional 1/2 hour and then reduced to 70°C. After that 1 gram of t-Butylperoxypivalate was added and the mixture was heated to reflux again and held for 1 hour after which another 1 gram of t-Butylperoxypivalate was added and the temperature again held at reflux for 1 hour. Following this the product was cooled and discharged. The product had a solids content of 37.76 wt% and a K value of 41.8.

Example 4

A 2 liter kettle equipped as described in Example 2 was purged with nitrogen for 10 minutes and the following ingredients were charged under a blanket of nitrogen:

| | |
|---|---|
| 780 g | isopropanol |
| 42 g | vinylpyrrolidone |
| 2.1 g | t-Butylperoxypivalate |

The mixture was then heated to a gentle reflux at 82°C after which an additional 378 grams of vinylpyrrolidone was continuously added over a 2 hour period while the temperature was maintained at reflux. The temperature was then held at reflux (about 85°C) for an additional 1/2 hour after which another 1 gram of t-Butylperoxypivalate was added and the temperature was maintained at reflux for another hour. An additional 1 gram of t-Butylperoxypivalate was then added and the temperature again maintained at reflux for 1 hour. The kettle was then changed to a distillation mode and 780 grams of isopropyl alcohol were distilled off at atmospheric pressure. Simultaneously 780 grams distilled water were added. During the distillation of isopropyl alcohol and addition of water the temperature was maintained at 85°C. The product was then cooled and discharged. The product contained 36.66 wt% solids and had a K value of 30.5.

While the invention has been described above with respect to polymerization of pure vinylpyrrolidone monomer it will be understood that minor amounts of various other monomers copolymerizable with vinylpyrrolidone may frequently be incorporated without detriment, although incorporation of more than about 10 wt% based on vinylpyrrolidone of such additional monomers may effect the operating conditions or proportions of ingredients needed to obtain polymer of desired K value.

Example 5

A 1 liter kettle equipped with mechanical stirrer, reflux condenser, thermometer and a dropping funnel was purged with nitrogen for 15 minutes after which 125 gm isopropanol and 125 gm distilled water were charged under a blanket of nitrogen. One hundred and twenty five grams of vinylpyrrolidone and 100 gms of vinyl acetate were charged into the dropping funnel. The kettle was heated to 78°C and 0.2 ml t-Butylperoxypivalate was added after which the VP/VA mixture in the dropping funnel was fed in four portions over 2 hours with one addition of 0.2 ml t-Butylperoxypivalate. At the end of two hours, 0.25 ml t-Butylperoxypivalate and 25 gms of VP were added to the kettle. The kettle was kept at reflux temperature for an additional two hours with one charge of 0.2 ml t-Butylperoxypivalate. The kettle was then cooled down and discharged. Analysis indicated that the product had a solids content of 51.37 wt% and a K value of 38.5.

Example 6

A 1 liter kettle equipped as described in Example 5 was purged with nitrogen for 15 minutes after which 200 gms of isopropanol and 50 gms of distilled water were charged under a blanket of nitrogen. The same amount of vinylpyrrolidone and vinyl acetate as described in Example 5 was charged into the dropping funnel. After the kettle was heated to 78°C and 0.2 ml t-Butylperoxypivalate was added then a feeding of VP, VA and catalyst schedule as described in Example 5 was carried out. The kettle was cooled down and discharged after 4 hours of polymerization. The product had a solids content of 55.86 wt% and a K value of 36.0.

Example 7

A 5 liter kettle equipped with mechanical stirrer, reflux condenser, thermometer and dropping funnel was purged with nitrogen for 15 minutes and the following ingredients were charged under a blanket of nitrogen:

| | |
|---|---|
| 1300 g | vinypyrrolidone |
| 1500 g | vinyl acetate |
| 3375 g | isopropanol |
| 375 g | distilled water |

The mixture was then heated to a gentle reflux at 78°C. Fifteen minutes after the addition of 3 ml t-Butylperoxypivalate the feeding of vinylpyrrolidone according to the following schedule was started.

| | |
|---|---|
| The first hour: | 315 gm VP per hour |
| The second hour: | 280 gm VP per hour |
| The third hour: | 200 gm VP per hour |
| The fourth hour: | 155 gm VP per hour |

Within the VP feeding period, 3 additional charges of catalyst 3 ml each were carried out. After the VP was completely fed in, the kettle was maintained at reflux temperature for 1/2 hour and then cooled down and discharged. Analysis indicated the product had a solid of 49.05 wt% and a K value of 30.1.

Example 8

A 1 liter kettle equipped as described in Example 5 was purged with nitrogen for 15 minutes after which 250 gm of isopropanol were charged under a blanket of nitrogen. One hundred and twenty five gramx of vinylpyrrolidone and 100 grams of vinyl acetate were charged into the dropping funnel. After the kettle was heated to a gentle reflux, 0.2 ml t-Butylperoxypivalate was added. A feeding schedule of VP, VA and catalyst as described in Example 5 was carried out. The kettle was cooled down and discharged. The product had a solid of 47.6 wt% and a Ka value of 26.1.

While the invention has been described above with respect to certain preferred embodiments, it will be understood by those skilled in the art that various changes and modifications may be made within the scope of the invention as claimed.

## Claims

1. Process which comprises polymerizing vinylpyrrolidone or vinylpyrrolidone and vinyl acetate monomers in a reaction zone in the presence of free radical initiator consisting essentially of t-Butylperoxypivalate to form polyvinylpyrrolidone or vinyl pyrrolidone/vinyl acetate copolymer product.

2. Process according to Claim 1 wherein the polymerization is carried out in solvent consisting essentially of water or isopropyl alcohol or sec. butyl alcohol or mixtures thereof.

3. Process according to Claim 2 wherein the solvent consists essentially of isopropyl alcohol.

4. Process according to Claim 2 wherein the solvent consists essentially of a mixture of isopropanol and water containing between 40 and 100 wt% water.

5. Process according to Claim 4 wherein the alcohol is removed by distillation following completion of the polymerization.

6. Process according to Claim 3 wherein following polymerization alcohol is removed by distillation with simultaneous addition of water.

7. Process according to any of Claims 1, 2 or 4—6 wherein product is removed from the reaction zone in the form of an aqueous solution containing between 20 and 60 wt% product.

8. Process according to any of Claims 1—7 wherein t-Butylperoxypivalate is used in an amount between 0.1 and 5 wt% based on monomer.

9. Process according to any of Claims 1—8 wherein the polymerization is carried out at a temperature between 100° and 150°C and a pressure between $2.3.10^5$ Pa (20 psig) and $11.3.10^5$ Pa (150 psig) to produce product having a K value between 10 and 20.

10. Process according to any of Claims 1—8 wherein the polymerization is carried out at a temperature between 40° and 100°C and a pressure between atmospheric and $2.3.10^5$ Pa (20 psig) to produce product having a K value between 20 and 100.

## Patentansprüche

1. Verfahren, das umfaßt die Polymerisation von Vinylpyrrolidonmonomeren oder von Vinylpyrrolidon- und Vinylacetatmonomeren in einer Reaktionszone in Gegenwart eines freie Radikal-Initiators, der im wesentlichen aus t-Butylperoxypivalat besteht, zur Herstellung eines Polyvinylpyrrolidon- oder Vinylpyrrolidon/Vinylacetat-Copolymer-Produkts.

2. Verfahren nach Anspruch 1, worin die Polymerisation in einem Lösungsmittel durchgeführt wird, das in wesentlichen aus Wasser oder Isopropylalkohol oder sec-Butylalkohol oder Mischungen davon besteht.

3. Verfahren nach Anspruch 2, worin das Lösungsmittel im wesentlichen aus Isopropylalkohol besteht.

4. Verfahren nach Anspruch 2, worin das Lösungsmittel im wesentlichen aus einer Mischung von Isopropanol und Wasser besteht, die zwischen 40 und 100 Gew.-% Wasser enthält.

5. Verfahren nach Anspruch 4, worin der Alkohol nach Beendigung der Polymerisation durch Destillation entfernt wird.

6. Verfahren nach Anspruch 3, worin nach der Polymerisation der Alkohol durch Destillation unter gleichzeitiger Zugabe von Wasser entfernt wird.

7. Verfahren nach einem der Ansprüche 1, 2 oder 4 bis 6, worin das Produkt in Form einer wäßrigen Lösung, die zwischen 20 und 60 Gew.-% Produkt enthält, aus der Reaktionszone entfernt wird.

8. Verfahren nach einem der Ansprüche 1 bis 7, worin t-Butylperoxypivalat in einer Menge zwischen 0,1 und 5 Gew.-%, bezogen auf das Monomere, verwendet wird.

9. Verfahren nach einem der Ansprüche 1 bis 8, worin die Polymerisation bei einer Temperatur zwischen 100 und 150°C und einem Druck zwischen $2,3\times10^5$ Pa (20 psig) und $11,3\times10^5$ Pa (150 psig) durchgeführt wird zur Herstellung eines Produkts mit einem K-Wert zwischen 10 und 20.

10. Verfahren nach einem der Ansprüche 1 bis 8, worin die Polymerisation bei einer Temperatur zwischen 40 und 100°C und einem Druck zwischen Atmosphärendruck und $2,3\times10^5$Pa (20 psig) durchgeführt wird zur Herstellung eines Produkts mit einem K-Wert zwischen 20 und 100.

**Revendications**

1. Procédé qui comprend la polymérisation de monomères de vinylpyrrolidone ou de vinylpyrrolidone et d'acétate de vinyl dans une zone réactionnelle en présence d'un initiateur de radicaux libres constitué essentiellement de t-butylperoxypivalate pour former un produit de polyvinylpyrrolidone ou de copolymères vinylpyrrolidone/acétate de vinyle.

2. Procédé selon la revendication 1, dans lequel la polymérisation est mise en oeuvre dans un solvant constitué essentiellement d'eau ou d'alcool isopropylique ou d'alcool butylique secondaire, ou de leurs mélanges.

3. Procédé selon la revendication 2, dans lequel le solvant est constitué essentiellement d'alcool isopropylique.

4. Procédé selon la revendication 2, dans lequel le solvant est constitué essentiellement d'un mélange d'isopropanol et d'eau contenant entre 40 et 100% en poids d'eau.

5. Procédé selon la revendication 4, dans lequel l'alcool est éliminé par distillation suivant l'achèvement de la polymérisation.

6. Procédé selon la revendication 3, dans lequel, après la polymérisation, l'alcool est éliminé par distillation avec addition simultanée d'eau.

7. Procédé selon l'une quelconque des revendications 1, 2 ou 4—6, dans lequel le produit est éliminé de la zone réactionnelle sous forme d'une solution aqueuse contenant entre 20 et 60% en poids du produit.

8. Procédé selon l'une quelconque des revendications 1 à 7, dans lequel le t-butylperoxypivalate est utilisé en une quantité comprise entre 0,1 et 5% en poids en se basant sur le monomère.

9. Procédé selon l'une quelconque des revendications 1 à 8, dans lequel le polymérisation est mise en oeuvre à une température entre 100°C et 150°C et une pression entre $0,3\times10^5$ Pa (20 psig) et $11,3\times10^5$ Pa (150 psig) pour produire un produit ayant une valeur K entre 10 et 20.

10. Procédé selon l'une quelconque des revendications 1 à 8, dans lequel la polymérisation est mise en oeuvre à une température entre 40°C et 100°C et une pression entre la pression atmosphérique et $2,3\times10^5$ Pa (20 psig) pour produire un produit ayant une valeur K entre 20 et 100.